# EUROPEAN PATENT SPECIFICATION

(11) **EP 2 070 586 B1**
(45) Date of publication and mention of the grant of the patent: **22.05.2013**
(21) Application number: 07023986.8
(22) Date of filing: 11.12.2007
(51) Int. Cl.: B01F 3/04, B01F 3/20, B01F 5/14, B67D 1/00, A23L 2/54, F25D 23/12

(54) **Beverage dispenser, related refrigerator and method for dispensing a beverage**
Getränkespender, darauf bezogene Kühlvorrichtung sowie Verfahren zum Ausgeben eines Getränks
Distributeur de boissons, réfrigérateur correspondant et procédé de distribution de boissons

(43) Date of publication of application: 17.06.2009
(73) Proprietor: Electrolux Home Products Corporation N.V., 1130 Brussel (BE)
(72) Inventor: Johansson, Daniel L., 31015- Conegliano (TV) (IT); Hedblom, Susanne, 31010 - Orsago (TV) (IT)
(74) Representative: Markovina, Paolo

(56) References cited:
- EP-A- 0 190 564
- EP-A- 1 580 502
- EP-A- 1 614 986
- GB-A- 857 523
- GB-A- 1 207 025
- GB-A- 2 016 086
- US-A- 3 179 382
- US-A- 4 264 214
- US-B1- 7 131 826

## Description

The present invention concerns a beverage dispenser provided with a water/liquid beverage carbonation system, a refrigerator comprising such a dispenser, and a related method for dispensing a bererage.

There are various carbonation systems known in the art, which permit the production of carbonate water on a demand basis.

Commonly on demand systems utilize specialized apparatus, so called in-line carbonator (where the carbonation is carried out at the time of dispensing the beverage), for combining water and carbon dioxide (CO₂) or any other gas, for example oxygen or to enhance the mixing and/or area of contact there between.

US 2007/0132114 discloses a motor driven diaphragm pump with a pump housing defining an interior chamber for receiving tap water and CO₂ wherein carbonizing takes place inside the pump housing by increasing the displacement pressure inside the pump.

The pump housing includes one inlet for receiving in combination the liquids and CO₂ and one outlet for transporting the liquid carbonized with CO₂ from the pump housing to an outlet line.

A drawback of above-mentioned carbonation systems is that the CO₂ and the water need to be pre-mixed before entering the pump housing in order to achieve a satisfactory level of carbonation.

In this manner the carbonation system requires a liquid/gas mixing point upstream the pump housing wherein a pre-mixer receives liquid from a liquid feed line and CO₂ from a gas feed line so as to supply the liquid/gas mixture to the pump housing through the pump housing inlet.

In practise in this carbonation system the carbonation is carried out in a two-stage process. The first stage of the process comprises passing the carbon dioxide and the water through a pre-mixer such as a turbulating device. In the second stage the partially carbonized fluid emerging from the pre-mixer flows into the pump housing wherein the diaphragm action causes further absorption and dissolution of the carbon dioxide into the liquid.

It is self-evident that this carbonation system is poorly flexible and complex and moreover it makes difficult the operation of controlling and adjusting in a precise way the amount of CO2 to be dissolved in the liquid in order to obtain a determined carbonation level of the final liquid beverage.

A further drawback derives from the fact that the diaphragm pump has been found not to be capable of effectively dissolving into the partially carbonized liquid the unabsorbed carbon dioxide emerging from the pre-mixer.

In addition, the components used make the above-mentioned carbonation system unreliable and subject to malfunctions.

The US Patent application 3,179,382 discloses a blending pump, especially used to mix fluids together in predetermined quantities and simultaneously pump the mixture so produced to a point outside the pump.

The GB Patent application 1207025 discloses a gear pump for making an air/liquid mixture, e.g. of ice cream or whipped cream. The gear pump has a liquid intake port, an outlet duct, and two air inlet ports, remote from the mesh of the gears. Liquid enters the pump through a passage in a plug the upper sleeve-like part of which has a cam profiled edge. The plug is rotatable by a lever whereby the sleeve forms an adjustable shutter for the inlet port. Thus the amount of liquid sucked in and hence the air/liquid ratio can be altered. A by-pass valve opens under excess delivery pressure to connect the delivery duct with the inlet port, the lower end of the valve simultaneously closing inlet port to prevent flow of mixture up the liquid supply pipe. In another embodiment, the rotatable plug has a sleeve with a set of calibrated inlet ports instead of a cam profile, and the by-pass valve has a body from which depends a flexible stem carrying a ball valve which closes the inlet port.

The European Patent application 1614986 discloses a refrigerator door with a carbonator installed therein. The refrigerator includes a heating device provided at an inner portion of the refrigerator door, for supplying heat to the carbonator. The refrigerator door further includes a temperature detecting device for measuring a temperature of the carbonator and then generating a signal indicating the measured temperature; and a controller for controlling the heating device according to the signal from the temperature detecting device. If the temperature of the carbonator is lower than or equal to a preset operation temperature, the controller controls the heating device to generate heat.

The European Patent application 1580502 discloses a refrigerator capable of fabricating a carbonated water that includes a water vessel. The refrigerator further comprises a mounting area for mounting therein the water vessel, a dispensing unit for carbonizing the water in the water vessel. The mounting area has a changeable vertical distance. Further, the mounting area has a first area with a specific height and a second area a predetermined height formed under the first area. The second area is selectively opened to communicate with the first area.

It is therefore a main object of the present invention to provide a beverage dispenser, which is effective in doing away with the above-noted drawbacks of the cited prior art, according to claim 1.

According to the present invention, this aim, along with further ones that will become apparent in the following disclosure, is further reached by a refrigerator according to claim 9, and a related method for dispensing a beverage according to claim 10.

Features and advantages of the present invention will anyway be more readily understood from the description that is given below by way of non-limiting example with reference to the accompanying drawings, in which;

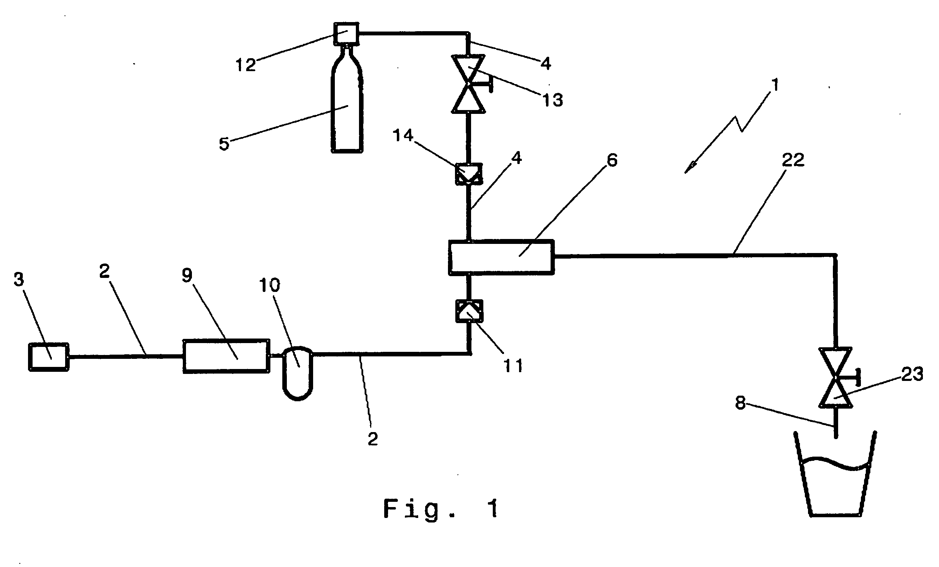

- Figure 1 is a schematic view of a beverage dispenser according to the present invention;

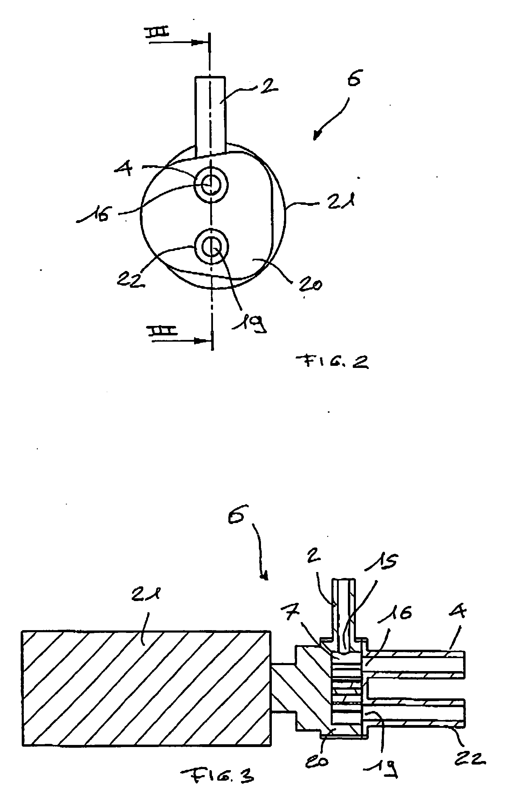

- Figure 2 is a front elevational view of a mixing pump according to the present invention;
- Figure 3 is a sectional view taken along line III-III of Fig. 2;
- Figure 4 is a perspective view of the mixing pump of figure 3;
- Figure 5 is a graph showing the CO₂ concentration and the flow rate of the dispensed liquid beverage in function of the CO₂ working pressure value and the liquid working pressure value.

With reference to the above-cited Figures, the beverage dispenser, as generally indicated with the reference numeral 1, comprises a liquid beverage supply line 2 fluidly connected to a water source 3, a carbon dioxide gas supply line 4 fluidly connected to a carbon dioxide pressurized source 5, at least one mixing pump 6 for carbonating the liquid beverage, a dispenser point 8 for dispensing the carbonated liquid beverage.
the mixing pump 6 comprises a chamber 7, at least one liquid beverage inlet port 15 and at least one carbon dioxide inlet port 16 for supplying separately the liquid beverage and the carbon dioxide into the chamber 7, intermeshing rotors 17,18 housed inside the chamber 7 and rotatably mounted in mesh with one another inside the chamber 7 for mixing the liquid beverage and the carbon dioxide introduced into the chamber 7, and at least one outlet port 19 for delivering the liquid/gas mixture to the dispenser point 8.

The liquid beverage supply line 2 of the beverage dispenser can be connected directly to the water supply mains (for example the municipal water supply mains) through a suitable connection or alternatively the water source 3 can be in the form of a pressurized tank. Normal building water pressure is sufficient.

The liquid beverage supply line 2 provides for connecting the water source 3 to a water pressure reducer 9 which is adapted to reduce the water pressure to a specified working pressure value, for example of 2 to 3 bar, in order to have the same starting conditions for the processing procedure independent of the pressure value of the water supply mains.

In practice, the water pressure reducer 9 renders the pressure value of the incoming water constant so as to avoid the problems connected to the pressure value fluctuations which normally affect the municipal water supply mains.

It can however be most readily appreciated that in case the water is supplied via a pressurized tank, there is no need for a pressure reducer, since the pressurized tank is adapted to feed the liquid beverage supply line with water having a constant pressure value, for example of 2 to 3 bar, as in the aforementioned embodiment including the pressure reducer fluidly connected to the municipal water supply mains.

Expediently, but not necessarily, a cooling unit 10 is provided to cool down the liquid beverage to be carbonated or the carbonated beverage to be dispended.

Preferably, the cooling unit 10 is fluidly connected to the water source 3 via the liquid beverage supply line 2 and it is provided upstream the mixing pump 6 in order to decrease the temperature of the liquid beverage thereby enhancing the amount of carbon dioxide that can be dissolved in the liquid beverage. As is known, lower temperature enhances the ability of water to absorb carbon dioxide.

The cooling unit 10 can be a compression cooling system operating in a known manner, namely with compressor, evaporator, and condenser. Alternatively a Peltier cooling system or other known cooling system can be used.

Further, the liquid beverage supply line 2 can comprise at least one filter device for filtering the liquid beverage to be delivered to the mixing pump 6.

Preferably, a non-return valve 11 is provided in the liquid beverage supply line 2 just upstream the mixing pump 6, wherein the beverage liquid is carbonated, in order to prevent liquid beverage flowing back towards the cooling unit 10.

The carbon dioxide supply line 4 extends from the pressurized CO₂ source 5 to the mixing pump 6 and it comprises a CO₂ pressure reducer 12 for reducing the pressure of the gas flowing through the carbon dioxide supply line 4 below an upper limit, for example 7 bar in order to ensure safety working conditions of the beverage dispenser according to the present invention.

The carbon dioxide supply line 4 comprises an electro-valve 13 arranged downstream the CO₂ pressure reducer 12 and adapted to fluidly connect, selectively, the CO₂ pressurized source 5 to the mixing pump 6 in order to produce carbonated liquid beverage when it is required. Advantageously, the electro-valve 13 is adapted to control and adjust the amount of CO₂ to be supplied to the mixing pump 6 so that the CO₂ content of the liquid beverage to be dispensed can be varied according to the desired level selected by the user.

Preferably, a non-return valve 14 is provided in the carbon dioxide supply line 4 between the electro-valve 13 and the mixing pump 6 for preventing CO₂ flowing back to the electro-valve 13.

In the embodiments being described here to mere exemplary purposes, the water working pressure downstream the water pressure reducer 9 has a value of 1.5 to 3 bar depending on the intake pressure available from of the urban water supply mains, which in some countries can be particularly low, around 2 bar.

In this connection, the pressurized tank simply ensures that slightly pressurized water at 1.5 to 3 bar, as in the case the liquid beverage supply line 4 is directly connected to the water supply mains, is delivered to the mixing pump 6 wherein carbonation takes place. In fact, for the carbonation to be carried out with better results (high carbonation level) a water pressure value slightly higher than the atmospheric pressure value would be preferable.

As regards the carbon dioxide side, in the embodiment being described here to mere exemplary purposes, the working pressure value of the CO₂ gas can vary in a range of 2 to 7 bar.

The mixing pump 6 is fluidly connected to the liquid beverage supply line 2 via the liquid beverage inlet port 15 and to the carbon dioxide supply line 4 via the carbon dioxide inlet port 16, for introducing separately the liquid beverage and carbon dioxide directly into the mixing pump 6, respectively.

In other words, the liquid beverage and the carbon dioxide are conveyed and introduced separately into the mixing pump 6. The liquid beverage and the carbon dioxide are combined together only inside the chamber 7 of the mixing pump 6 where the carbonation process takes place.

The mixing pump 6 comprises a hollow casing 20 forming the chamber 7 inside which a pair of gears 17, 18 in mesh with one another are housed.

The chamber 7 fluidly communicates via the liquid beverage inlet port 15 with the liquid beverage supply line 2 and via the carbon dioxide inlet port 16 with the carbon dioxide supply line 4.

The mixing pump 6 comprises a housing 21 adapted to contain a drive shaft (not shown) mechanically connected to the intermeshing drive gear 17 and a parallel shaft or bushing (not shown) mechanically connected to the intermeshing idler gear 18. The drive shaft is connected to a motor so that the powered mixing pump can be mechanically driven or magnetically driven.

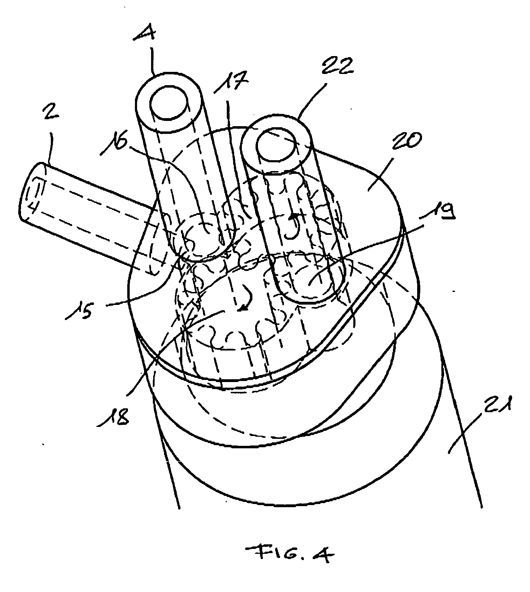

In the preferred embodiment being described the mixing pump 6 is configured as an external gear pump comprising two intermeshing gears 17, 18 reciprocally arranged one outwardly the other, their rotational axis being parallel and their rotational direction being opposite one each other (clockwise and counter-clockwise) as represented by the arrows in figure 4.

The liquid is received in the chamber 7 via the liquid inlet port 15 and mixed with the carbon dioxide gas during passage to the mixture outlet port 19.

The mixture outlet port 19 is provided downstream of the zone where the rotors 17,18 move out of mesh.

In practise during the operation of the beverage dispenser according to embodiment being disclosed, the liquid and the carbon dioxide gas are introduced separately into the chamber 7 of the mixing pump 6 via the liquid inlet port 15 and the gas inlet port 16, respectively.

The liquid and the gas enter the chamber 7 at a recess thereof where the gears 17,18 begin to come into mesh. The rotating action of the intermeshing gears 17,18 combines the fluids into a mixture (due to the extremely high liquid/gas contact surface and the displacement pressure generated inside the chamber 7) and transfers the resulting liquid/gas mixture to the opposite side of the chamber where the gears 17,18 begin to come out of mesh. Then the carbonated liquid exits the chamber 9 via the outlet port 19, which is fluidly connected to said opposite side of the chamber 7, to be delivered to the dispenser point 8.

As regards the rotors, it has been found that spur, helical, herringbone gear sets can be employed in the present invention as well as lobe shaped rotors.

Further, even if an external gear pump has been described here to mere exemplary purposes, an internal gear pump, which includes an external idler gear encompassing an internal drive gear in a reciprocal intermeshing way, can be used as an alternative.

The action of the gears 17,18 enables the gas to effectively mix with the liquid beverage so as to maximize the carbon dioxide absorption inside the mixing pump 6.

In this way it is possible to achieve a high carbonation level without utilizing a pre-mixer upstream the mixing pump 6.

A carbonated beverage supply line 22 fluidly connects the outlet port 19 of the mixing pump 6 to the dispenser point 8, which includes an outlet valve 23 for dispensing the carbonated beverage. Operation of the outlet valve 23 causes the simultaneous actuation of the rotors 17,18.

Optionally a compensator can be provided in correspondence to the dispenser point 8 so that the carbonated beverage can be issued with a pleasant jet.

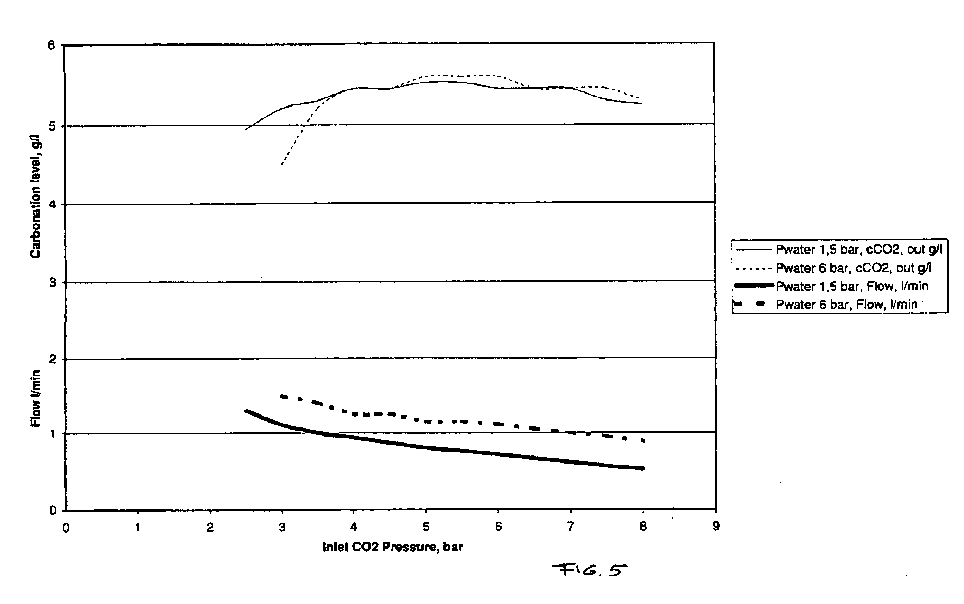

A series of tests has been performed leading to the graph shown in fig. 5 where the Y-axis depicts the CO₂ concentration of the dispensed beverage in gram per liter and further the flow rate of the dispensed liquid in liter per minute, the X-axis depicts the CO₂ working pressure value in bar (the experimental data of the graph are obtained for working water pressures of 1.5 and 6 bar).

It can be appreciated that the CO₂ concentration remains above 5 g/l for a CO₂ working pressure of 3.5 to 8 bar, whereas the flow rate tends to slightly decrease when the CO₂ working pressure increases, the absolute value of the flow rate being dependent on the liquid working pressure. However even with a CO₂ working pressure of 8 bar the flow rate is still sufficiently high for the beverage dispenser to operate in an effective manner.

It can be fully appreciated that the present invention not only allows carbonated beverage to be produced inside a mixer pump without the need of any pre-mixing but it enables the carbonation process to be carried out in a effectively manner even if both the working pressure of the carbon dioxide gas supply line 4 and the working pressure of the liquid beverage supply line 2 vary within a broad range without adversely affecting the final CO₂ concentration of the dispensed beverage.

It has to be stressed that according to the present invention, the liquid beverage working pressure, downstream the water pressure reducer 9, can also be higher than 3 bar, in some country, in fact, the intake pressure available from the municipal water supply mains is around 4-5 bar and also near 6 bar.

The extreme values of the CO2 working pressure range are determined by the fact that below 2 bar, extremely low or no liquid/gas mixing at all occurs, whereas above 7 bar the liquid beverage is prevented to enter chamber 7 of the mixing pump 6.

According to the present invention, the liquid working pressure value can be higher or lower than the CO2 working pressure value of the carbon dioxide supply line 4 depending on the hydraulic characteristic of the fluid circuit and of the mixing pump 6.

Optionally, the beverage dispenser according to the present invention can be in the form of a post-mix dispenser adapted to mix syrup or concentrate to the flat or carbonated water to produce beverage of different flavour wherein the mixing is carried out at the time of dispensing. For this purpose, the beverage dispenser can comprise a plurality of refillable reservoirs or cartridge or disposable capsules containing syrups or concentrates to be mixed with water. The concentrate containers can be fluidly connected to the liquid beverage supply line 2 or to the carbonated beverage supply line 22 in order to introduce the concentrate into the flat water, i.e. upstream the mixing pump 6, or into the carbonated water, i.e. downstream the mixing pump 6.

The beverage dispenser according to the present invention can be used in any beverage dispensing apparatus and preferably in home appliances, in particular refrigerators, built-in units, beverage centre as well as in free standing devices.

The beverage dispenser according to the present invention provides a carbonation system utilizing few, simple and low cost components, which do not need particular requirements about adjustment, operation and maintenance.

Conclusively, it can therefore be stated that the carbonation system provided in the beverage dispenser according to the present invention is fully effective in solving the drawbacks connected with prior-art systems in a simple manner.

## Claims

1. A beverage dispenser comprising
a liquid supply line (2) fluidly connected to a water source (3),
a gas supply line (4) fluidly connected to a carbon dioxide pressurized source (5),
at least one mixing pump (6) for carbonating the liquid,
a dispenser point (8) for dispensing the carbonated liquid,
wherein said mixing pump (6) comprises a chamber (7) for receiving said liquid and said gas, at least one liquid inlet port (15) and at least one gas inlet port (16) for supplying the liquid and the gas into the chamber (7), intermeshing rotors (17,18) housed inside the chamber and rotatably mounted in mesh with one another inside the chamber (7) for mixing the liquid and the gas introduced into the chamber (7), and at least one outlet port (19) for delivering the liquid/gas mixture to the dispenser point (8),
**characterized in that** the chamber (7) has a recess where the intermeshing rotors (17,18) begin to come into mesh and **in that** said liquid supply line (2) and said gas supply line (4) exit into said recess via said liquid inlet port (15) and said gas inlet port (16), respectively, said liquid inlet port (15) and said gas inlet port (16) being separate from each other

2. A beverage dispenser according to claim 1, wherein said intermeshing rotors (17,18) comprise a pair of gears reciprocally arranged one outwardly the other.

3. A beverage dispenser according to claim 2, wherein the outlet port (19) is provided downstream of the zone where the rotors (17,18) are in mesh.

4. A beverage dispenser according to claim 1, wherein the rotors comprise an external idler gear encompassing an internal drive gear in a reciprocal intermeshing way.

5. A beverage dispenser according to any of the preceding claims, wherein said liquid beverage supply line (2) is connected to the municipal water supply mains or alternatively the water source (3) is a pressurized tank.

6. A beverage dispenser according to any of the preceding claims, wherein a cooling unit (10) is provided to cool down the liquid beverage to be carbonated or the carbonated beverage to be dispended.

7. A beverage dispenser according to any of the preceding claims, wherein the carbon dioxide gas supply line (4) comprises an electro-valve (13) adapted to fluidly connect, selectively, the carbon dioxide pressurized source (5) to the mixing pump (6), said the electro-valve (13) is adapted to control and adjust the amount of carbon dioxide gas to be introduced into the mixing pump (6) so that the carbon dioxide content of the liquid beverage to be dispensed can be varied according to a level to be selected by a user.

8. A beverage dispenser according to any of the preceding claims, comprising a post-mix dispenser adapted to introduce syrup or concentrate into the flat water upstream the mixing pump (6), or into the carbonated water downstream the mixing pump (6).

9. A refrigerator comprising the beverage dispenser according to any of the preceding claims.

10. method for dispensing a beverage comprising:
supplying a liquid from a water source,
supplying a gas from a carbon dioxide pressurized source,
supplying the liquid and the gas to a chamber of a mixing pump housing intermeshing rotors rotatably mounted in mesh with one another,
mixing the liquid and the gas by the rotating action of the intermeshing rotors, and
delivering the liquid/gas mixture to a dispenser point,
wherein the liquid and the gas are supplied separately to a recess of the chamber where the intermeshing rotors begin to come into mesh.

11. A method according to claim 10, wherein the working pressure value of the liquid beverage to be introduced into the chamber (7) is 1.5 to 7 bar.

12. A method according to claim 10, wherein the working pressure value of the carbon dioxide gas introduced into the chamber (7) is 2 to 7 bar.

## Patentansprüche

1. Getränkespender, umfassend:
eine Flüssigkeitszufuhrleitung (2), die mit einer Wasserquelle (3) in Fluidverbindung steht,
eine Gaszufuhrleitung (4), die mit einer druckbeaufschlagten Kohlendioxidquelle (5) in Fluidverbindung steht,
mindestens eine Mischpumpe (6), um die Flüssigkeit zu karbonisieren,
eine Ausgabestelle (8) zum Ausgeben der karbonisierten Flüssigkeit,
wobei die Mischpumpe (6) Folgendes umfasst: eine Kammer (7) zum Aufnehmen der Flüssigkeit und des Gases, mindestens eine Flüssigkeitseinlassöffnung (15) und mindestens eine Gaseinlassöffnung (16), um die Flüssigkeit und das Gas in die Kammer (7) zu befördern, ineinandergreifende Rotoren (17, 18), die in der Kammer untergebracht sind und auf ineinandergreifende Weise in der Kammer (7) drehbar montiert sind, um die Flüssigkeit und das Gas zu mischen, die in die Kammer (7) eingeführt wurden, und mindestens eine Auslassöffnung (19) zum Befördern des Flüssigkeits-/Gas-Gemisches zur Ausgabestelle (8),
**dadurch gekennzeichnet, dass** die Kammer (7) eine Vertiefung aufweist, wo die ineinandergreifenden Rotoren (17, 18) ineinanderzugreifen beginnen, und dass die Flüssigkeitszufuhrleitung (2) und die Gaszufuhrleitung (4) durch die Flüssigkeitseinlassöffnung (15) und die Gaseinlassöffnung (16) zur Vertiefung hin austreten, wobei die Flüssigkeitseinlassöffnung (15) und die Gaseinlassöffnung (16) voneinander getrennt sind.

2. Getränkespender nach Anspruch 1, wobei die ineinandergreifenden Rotoren (17, 18) ein Paar Zahnräder umfassen, die wechselseitig derart angeordnet sind, dass sich eines außerhalb des anderen befindet.

3. Getränkespender nach Anspruch 2, wobei die Auslassöffnung (19) stromabwärts von dem Bereich vorgesehen ist, wo die Rotoren (17, 18) ineinandergreifen.

4. Getränkespender nach Anspruch 1, wobei die Rotoren ein äußeres Freilaufzahnrad umfassen, das ein inneres Antriebszahnrad auf wechselseitig ineinandergreifende Weise umgibt.

5. Getränkespender nach einem der vorhergehenden Ansprüche, wobei die Flüssigkeitszufuhrleitung (2) mit der kommunalen Wasserversorgung verbunden ist oder wobei alternativ dazu die Wasserquelle (3) ein druckbeaufschlagter Tank ist.

6. Getränkespender nach einem der vorhergehenden Ansprüche, wobei eine Kühleinheit (10) vorgesehen ist, um das zu karbonisierende flüssige Getränk oder das auszugebende karbonisierte Getränk zu kühlen.

7. Getränkespender nach einem der vorhergehenden Ansprüche, wobei die Kohlendioxidgaszufuhrleitung (4) ein Elektroventil (13) umfasst, das geeignet ist, die druckbeaufschlagte Kohlendioxidquelle (5) selektiv in Fluidverbindung mit der Mischpumpe (6) zu bringen, wobei das Elektroventil (13) geeignet ist, die in die Mischpumpe (6) einzuführende Menge an Kohlendioxidgas zu steuern und einzustellen, so dass der Kohlendioxidgehalt des auszugebenden flüssigen Getränks in Abhängigkeit von einem Niveau variiert werden kann, das durch einen Nutzer gewählt wird.

8. Getränkespender nach einem der vorhergehenden Ansprüche, umfassend einen Post-Mix-Spender, der geeignet ist, einen Sirup oder ein Konzentrat in das stille Wasser stromaufwärts von der Mischpumpe (6) oder in das karbonisierte Wasser stromabwärts von der Mischpumpe (6) einzuleiten.

9. Kühlvorrichtung, umfassend den Getränkespender nach einem der vorhergehenden Ansprüche.

10. Verfahren zum Ausgeben eines Getränks, umfassend:
Zuführen einer Flüssigkeit von einer Wasserquelle,
Zuführen eines Gases von einer druckbeaufschlagten Kohlendioxidquelle,
Einführen der Flüssigkeit und des Gases in eine Kammer einer Mischpumpe, in der ineinandergreifende Rotoren untergebracht sind, die drehbar ineinandergreifend montiert sind,
Mischen der Flüssigkeit und des Gases durch die Rotationswirkung der ineinandergreifenden Rotoren, und
Befördern des Flüssigkeits-/Gas-Gemisches zu einer Ausgabestelle,
wobei die Flüssigkeit und das Gas getrennt zu einer Vertiefung der Kammer befördert werden, wo die ineinandergreifenden Rotoren ineinanderzugreifen beginnen.

11. Verfahren nach Anspruch 10, wobei der Wert des Betriebsdrucks des in die Kammer (7) einzuführenden flüssigen Getränks 1,5 bis 7 Bar beträgt.

12. Verfahren nach Anspruch 10, wobei der Wert des Betriebsdrucks des in die Kammer (7) einzuführenden Kohlendioxidgases 2 bis 7 Bar beträgt.

## Revendications

1. Distributeur de boissons, comprenant :
une conduite d'alimentation en liquide (2) raccordée de façon fluidique à une source d'eau (3),
une conduite d'alimentation en gaz (4) raccordée de façon fluidique à une source sous pression de dioxyde de carbone (5),
au moins une pompe de mélange (6) pour gazéifier le liquide,
un point distributeur (8) pour distribuer le liquide gazéifié,
dans lequel ladite pompe de mélange (6) comprend une chambre (7) pour recevoir ledit liquide et ledit gaz, au moins un orifice d'admission de liquide (15) et au moins un orifice d'admission de gaz (16) pour fournir le liquide et le gaz dans la chambre (7), des rotors en engrènement mutuel (17, 18) logés à l'intérieur de la chambre et montés de façon rotative en engrènement l'un avec l'autre à l'intérieur de la chambre (7) pour mélanger le liquide et le gaz introduits dans la chambre (7), et au moins un orifice de sortie (19) pour distribuer le mélange de liquide/gaz au point distributeur (8),
**caractérisé en ce que** la chambre (7) comporte un évidement où les rotors en engrènement mutuel (17, 18) commencent à s'engrener et **en ce que** ladite conduite d'alimentation en liquide (2) et ladite conduite d'alimentation en gaz (4) sortent dans ledit évidement par l'intermédiaire dudit orifice d'entrée de liquide (15) et dudit orifice d'admission de gaz (16), respectivement, ledit orifice d'admission de liquide (15) et ledit orifice d'admission de gaz (16) étant séparés l'un de l'autre.

2. Distributeur de boissons selon la revendication 1, dans lequel lesdits rotors en engrènement mutuel (17, 18) comprennent une paire de roues dentées agencées réciproquement l'une vers l'extérieur de l'autre.

3. Distributeur de boissons selon la revendication 2, dans lequel l'orifice de sortie (19) est prévu en aval de la zone où les rotors (17, 18) sont en engrènement.

4. Distributeur de boissons selon la revendication 1, dans lequel les rotors comprennent une roue dentée libre externe incluant une roue dentée d'entraînement interne de manière engrenée réciproque.

5. Distributeur de boissons selon une quelconque des revendications précédentes, dans lequel ladite conduite d'alimentation en boisson liquide (2) est raccordée au réseau municipal d'approvisionnement en eau ou en variante la source d'eau (3) est un réservoir sous pression.

6. Distributeur de boissons selon une quelconque des revendications précédentes, dans lequel une unité de refroidissement (10) est prévue pour refroidir la boisson liquide destinée à être gazéifiée ou la boisson gazéifiée destinée à être distribuée.

7. Distributeur de boissons selon une quelconque des revendications précédentes, dans lequel la conduite d'alimentation en dioxyde de carbone gazeux (4) comprend une électrovalve (13) adaptée pour raccorder de façon fluidique, sélectivement, la source sous pression de dioxyde de carbone (5) à la pompe de mélange (6), ladite électrovalve (13) est adaptée pour commander et régler la quantité de dioxyde de carbone gazeux destinée à être introduite dans la pompe de mélange (6) pour que la teneur en dioxyde de carbone de la boisson liquide destinée à être distribuée puisse être variée selon un niveau destiné à être sélectionné par un utilisateur.

8. Distributeur de boissons selon une quelconque des revendications précédentes, comprenant un distributeur post-mélange adapté pour introduire un sirop ou un concentré dans l'eau plate en amont de la pompe de mélange (6), ou dans l'eau gazéifiée en aval la pompe de mélange (6).

9. Réfrigérateur comprenant le distributeur de boisson selon une quelconque des revendications précédentes.

10. Procédé pour distribuer une boisson, comprenant :
la fourniture d'un liquide à partir d'une source d'eau,
la fourniture d'un gaz à partir d'une source sous pression de dioxyde de carbone,
la fourniture du liquide et du gaz à une chambre d'une pompe de mélange logeant des rotors en engrènement mutuel montés de façon rotative en engrènement l'un avec l'autre,
le mélange du liquide et du gaz par l'intermédiaire de l'action rotative des rotors en engrènement mutuel, et
la distribution du mélange de liquide/gaz à un point distributeur,
dans lequel le liquide et le gaz sont fournis séparément à un évidement de la chambre où les rotors en engrènement mutuel commencent à s'engrener.

11. Procédé selon la revendication 10, dans lequel la valeur de pression de service de la boisson liquide destinée à être introduite dans la chambre (7) est 1,5 à 7 bars.

12. Procédé selon la revendication 10, dans lequel la valeur de pression de service du dioxyde de carbone gazeux introduit dans la chambre (7) est 2 à 7 bars.
